(19) Europäisches Patentamt
European Patent Office
Office européen des brevets

(11) EP 4 546 556 A1

(12) EUROPEAN PATENT APPLICATION
published in accordance with Art. 153(4) EPC

(43) Date of publication:
30.04.2025 Bulletin 2025/18

(21) Application number: 22970372.3

(22) Date of filing: 21.07.2022

(51) International Patent Classification (IPC):
H01M 50/593 (2021.01)    H01M 50/102 (2021.01)
H01M 50/15 (2021.01)

(52) Cooperative Patent Classification (CPC):
H01M 50/586; H01M 50/103; H01M 50/14;
H01M 50/147; H01M 50/15; H01M 50/474;
H01M 50/593; H01M 50/102; Y02E 60/10

(86) International application number:
PCT/CN2022/107137

(87) International publication number:
WO 2024/016273 (25.01.2024 Gazette 2024/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Contemporary Amperex Technology
Co., Limited
Ningde, Fujian 352100 (CN)

(72) Inventors:
• CHENG, Qi
Ningde, Fujian 352100 (CN)

• WANG, Hong
Ningde, Fujian 352100 (CN)
• CHEN, Wenwei
Ningde, Fujian 352100 (CN)
• ZHOU, Jian
Ningde, Fujian 352100 (CN)
• LI, Quankun
Ningde, Fujian 352100 (CN)

(74) Representative: Gong, Jinping
CocreateIP
Neumarkterstr. 21
81673 München (DE)

(54) **BATTERY CELL, BATTERY AND ELECTRIC DEVICE**

(57)     A battery cell, a battery and an electrical device. A battery cell (10) includes a case (20) having an end portion opening (22); an electrode assembly (30) arranged in the case (20); a cover plate (41) arranged on the end portion opening (22); an isolation structure (42) arranged on one side of the cover plate (41) adjacent to the electrode assembly (30); and a supporting member (50) fixedly connected to the isolation structure (42) and configured to support the electrode assembly (30).

FIG. 3

EP 4 546 556 A1

# Description

## Technical Field

The present disclosure relates to the technical field of batteries, and more particularly to a battery cell, a battery, and an electrical device.

## Background Art

Secondary batteries, especially lithium-ion batteries, have the advantages of high voltage, large specific energy, long cycle life, pollution-free, wide operating temperature range, and small self-discharge. They are widely used in portable electronic devices and power devices of large new-energy electric vehicles, and are of great significance to solving human environmental pollution and energy crisis. As lithium-ion batteries are widely used, users are increasingly concerned about their reliability.

## Summary of the Invention

In an aspect of the present disclosure, a battery cell is provided, including:

a case having an end portion opening;
an electrode assembly arranged in the case;
a cover plate arranged on the end portion opening;
an isolation structure arranged on one side of the cover plate adjacent to the electrode assembly; and
a supporting member fixedly connected to the isolation structure and configured to support the electrode assembly.

The supporting member is fixedly connected to the isolation structure to achieve stability of relative positions between the supporting member and the isolation structure, and achieves a supporting function of the electrode assembly in the case by using the stiffness of the supporting member itself to control the movement and deformation of the electrode assembly in the case, and inhibit the displacement of the electrode assembly, thereby effectively protecting the electrode assembly and improving the reliability of using the battery cell.

In some embodiments, the supporting member is a plate-shaped supporting member, and the supporting member includes:

a first section, wherein the first section is arranged opposite to a main body part of the electrode assembly in a thickness direction of the supporting member; and
a second section, wherein the second section is located on at least one side of the first section in a thickness direction of the cover plate, and the second section protrudes from the main body part of the electrode assembly in the thickness direction of the cover plate,
wherein the second section is fixedly connected to the isolation structure.

The first section of the supporting member is arranged opposite the main body part of the electrode assembly in the thickness direction of the supporting member, which can effectively isolate the main body part of the electrode assembly from the case, while the second section of the supporting member is located on at least one side of the first section in the thickness direction of the cover plate, and the second section protrudes from the main body part of the electrode assembly in the thickness direction of the cover plate, which is equivalent to that the length of the second section of the supporting member in the thickness direction of the cover plate does not overlap with the length of the main body part of the electrode assembly in the thickness direction of the cover plate, so that the second section is avoided from being interfered by the main body part of the electrode assembly when it is fixedly connected to the isolation structure. Therefore, the isolation structure can have a sufficient space to connect the second section, thereby improving the reliability of the connection between the isolation mechanism and the supporting member.

In some embodiments, a surface of one side of the first section adjacent to the main body part is fixedly connected to the main body part.

The supporting member is fixedly connected to the main body part through the first section, and is fixedly connected to the isolation structure through the second section, so that the supporting function of the electrode assembly in the case can be achieved by using the stiffness of the supporting member itself to control the movement and deformation of the electrode assembly in the case, and inhibit the displacement of the electrode assembly in the case, thereby reducing the risk of a tab being torn due to the displacement of the electrode assembly.

In some embodiments, a surface of one side of the first section adjacent to the main body part is in integral contact with the main body part.

The first section of the supporting member is in integral contact with and fixedly connected to the main body part. In this way, a wider range of supporting function is formed for the main body part in the thickness direction of the cover plate by the supporting member, and the deformation of the electrode assembly is more effectively controlled, so that the main body part is not easy to collide or rub against an inner wall of the case due to deformation, thereby more effectively protecting the electrode assembly and improving the reliability of the battery cell.

In some embodiments, the second section is fixedly connected to the isolation structure by hot melting.

The second section and the isolation structure are fixedly connected by hot melting, which is easy to implement in terms of technology. Moreover, when the second section beyond the main body part is hot-melt connected to the isolation structure, a relatively sufficient hot-melt space can be obtained to ensure the reliability of the hot-melt connection.

In some embodiments, the hot-melt connection structure between the second section and the isolation structure includes a positioning hole and a hot-melt pillar. The hot-melt pillar passes through the positioning hole and is hot-melt connected to the positioning hole.

By passing the hot-melt pillar through the positioning hole, the positioning function before hot-melt connection can be realized, thereby limiting the relative positions between the supporting member and the isolation structure, and ensuring a reliable hot-melt connection between the supporting member and the isolation structure while avoiding the displacement between the supporting member and the isolation structure during the hot-melt connection, which is beneficial to the accuracy of subsequent assembling.

In some embodiments, in the thickness direction of the plate-shaped supporting member, there is a gap **T1** between the surface of one side of the second section adjacent to the isolation structure and the isolation structure.

When the second section is fixedly connected to the isolation structure, the fixed connection structure may cause deformation of the supporting member. For example, the stress at a hot-melt part during the hot-melt connection may cause deformation of the supporting member. For the case where the first section of the supporting member is fixedly connected to the main body part of the electrode assembly, deformation of the supporting member may affect the fixed connection between the supporting member and the electrode assembly. The use of the gap T1 between the surface of one side of the second section adjacent to the isolation structure and the isolation structure can help reduce the deformation of the supporting member. For the hot-melt connection between the isolation structure and the second section, the gap T1 can reduce the stress in the hot-melt part, thereby reducing the deformation of the supporting member.

In some embodiments, **T1** meets:

$$0.2*T2 \leq T1 \leq T2;$$

wherein **T2** is the thickness of the plate-shaped supporting member.

The thickness of the supporting member affects the stiffness of the supporting member itself. Setting the gap according to the thickness of the supporting member can control the reasonable deformation of the supporting member during fixed connection, such as hot-melt fixing. For the fixed connection between the supporting member and the electrode assembly, a reliable connection between the supporting member and the electrode assembly can be ensured.

If the gap **T1** is too high or too low, when the second section is hot-melt fixed to the isolation structure, the hot-melt part may form a stress that pulls or squeezes the second section, so that the hot-melting effect becomes worse, resulting in a significant deformation of the first section that is fixedly connected to the outer contour of the electrode assembly, which may affect the reliable connection between the supporting member and the electrode assembly. Therefore, by making the height of the gap meet a specific size relationship with the thickness of the supporting member, the hot-melt effect can be improved to achieve a reliable connection between the supporting member and the electrode assembly.

In some embodiments, in the thickness direction of the cover plate, the minimum distance **T3** from a connection part of the second section and the isolation structure to an end portion of one side of the isolation structure adjacent to the main body part meets:

$$4*T2 \leq T3 \leq 15*T2;$$

wherein **T2** is the thickness of the plate-shaped supporting member.

The thickness of the supporting member affects the stiffness of the supporting member itself. Setting the position of the fixed connection part relative to the isolation structure according to the thickness of the supporting member can control the reasonable deformation of the supporting member during fixed connection, such as hot-melt connection, thereby ensuring a reliable connection between the supporting member and the electrode assembly.

If the hot-melt part is too close to the end portion of the isolation structure, the hot-melt range may be limited and it may be difficult to achieve a reliable connection, which may affect the hot-melt effect. For the hot-melt part, if the hot-melt part is too far away from the end portion of the isolation structure, an isolation structure with a thicker size is required, which affects the length of the electrode assembly, thereby affecting the capacity of the battery cell. Therefore, by making the distance of the connection part relative to the end portion of the isolation structure meet the specific size relationship with the thickness of the supporting member, the connection effect, such as the hot-melt effect, can be improved, thereby realizing a reliable connection between the supporting member and the electrode assembly, and improving the capacity of the battery cell.

In some embodiments, the main body part of the electrode assembly and the supporting member are fixed by bonding with an adhesive tape.

The supporting member and the main body part of the electrode assembly are fixed by bonding with the adhesive tape, so that the connection operation of the supporting member and the main body part is more convenient, and there is no need to provide other structures for connection on the supporting member and the electrode assembly.

In some embodiments, the main body part of the electrode assembly and the supporting member are fixed by bonding with a plurality of adhesive tapes, and the plurality of adhesive tapes are arranged at intervals in the thickness direction of the cover plate.

Compared with the method of fixing the electrode assembly and the supporting member by bonding with a long whole section of adhesive tape, a plurality of adhesive tapes arranged at intervals can meet the requirement of fixed connection while saving the amount of adhesive tape and saving costs.

In some embodiments, in the thickness direction of the cover plate, the width T4 of each adhesive tape meets:

$$0.02*L \leq T4 \leq 0.2*L;$$

wherein **L** is the length of the supporting member in the thickness direction of the cover plate.

When the plurality of adhesive tapes arranged at intervals in the length direction of the electrode assembly are used to achieve the fixed connection between the electrode assembly and the supporting member, an excessively wide adhesive tape requires a larger amount of adhesive tape and increases the cost, while an excessively narrow adhesive tape cannot achieve sufficient connection strength and thus affecting the reliability of the fixed connection. Therefore, by making the width of the adhesive tape meet the specific size relationship with the length of the supporting member, the amount of adhesive tape can be saved as much as possible and the costs can be reduced while ensuring the reliable fixed connection between the supporting member and the electrode assembly.

In some embodiments, the supporting member has two end portions in the thickness direction of the cover plate, and spacings **T5** between two adhesive tapes respectively adjacent to the two end portions among the plurality of adhesive tapes and the corresponding end portions meet:

$$0.04*L \leq T5 \leq 0.2*L;$$

wherein **L** is the length of the supporting member in the thickness direction of the cover plate.

The spacing **T5** reflects the position of an outermost adhesive tape among the plurality of adhesive tapes on the supporting member. When the outermost adhesive tape adheres and fixes the supporting member, lifting of the end portion of the supporting member can be effectively controlled. If the spacing **T5** is too large, the effect of lifting of the end portion of the supporting member will be affected. If the spacing **T5** is too small, the hot-melt region between the supporting member and the isolation structure may be restricted. Therefore, by making the spacing **T5** meet the specific size relationship with the length **L** of the supporting member, the influence on the hot-melt region can be reduced and the lifting of the end portion of the supporting member can be alleviated.

In some embodiments, in the thickness direction of the cover plate, a spacing **T6** between adjacent adhesive tapes in the plurality of adhesive tapes meets:

$$0.1*L \leq T6 \leq 0.5*L;$$

wherein **L** is the length of the supporting member in the thickness direction of the cover plate.

The plurality of adhesive tapes are arranged at intervals being the spacings **T6,** so that the fixed connection function of the adhesive tapes can be distributed evenly in the length direction of the electrode assembly, which effectively controls the deformation of different positions of the supporting member, thereby achieving a more reliable fixed connection relationship between the electrode assembly and the supporting member. An excessively large spacing **T6** affects the connection strength between the electrode assembly and the supporting member, while an excessively small spacing **T6** may increase the amount of adhesive tape, increase costs, and also increase the process of pasting the adhesive tape. Therefore, by making the spacing of the adjacent adhesive tapes meet the specific size relationship with the length of the supporting member, the amount of adhesive tape can be saved as much as possible, the costs can be reduced, and the process can be saved while ensuring the reliable fixed connection between the supporting member and the electrode assembly.

In some embodiments, the battery cell includes two cover plates, two end portion openings are respectively provided at both ends of the case, and each of the cover plates is arranged on the corresponding end portion opening.

The two cover plates are respectively arranged on the end portion openings at both ends of the case, for closing the end portion openings, so that the two cover plates and the case jointly form a sealed cavity for accommodating the electrode assembly, thereby effectively protecting the electrode assembly and ensuring that the electrode assembly is capable of working stably for a long time.

In some embodiments, the two cover plates include a first cover plate connected to an end portion opening on one side of the case; the isolation structure includes: a first insulating block and a second insulating block, the first insulating block is fixed on a surface of one side of the first cover plate adjacent to the electrode assembly, and at least a part of the second insulating block is located between the first insulating block and the main body part of the electrode assembly, and is fixedly connected to the supporting member.

The isolation structure separates the first cover plate and the main body part of the electrode assembly through the second insulating block to prevent damage to the electrode assembly caused by collision between the main body part and the first cover plate, and the second insulating block is fixedly connected to the supporting member, which can achieve the stability of the relative positions between the supporting member and the isolation structure. By arranging at least a part of the second insulating block between the first insulating block fixed on the surface of the first cover plate and the main body part, the second insulating member can play a position-limiting role on the main body part, thereby avoiding the risk of the main body part displacing due to vibration and other reasons when the battery cell is in use, thereby causing damage to the electrode assembly or even a short circuit.

In some embodiments, the first insulating block is configured to limit the position of the second insulating block in at least one of the first direction and the second direction, and is in clearance fit with the second insulating block at least one of the first direction and the second direction, and the first direction and the second direction are perpendicular to each other and both are perpendicular to the thickness direction of the cover plate.

The isolation structure, by using the first insulating block to limit the position of the second insulating block in at least one of the first direction and the second direction, in cooperation with the fixed connection between the second insulating block and the supporting plate and the position-limiting effect on the main body part, effectively limits the relative positions between the electrode assembly and an end cover assembly, thereby reducing the risk of the electrode assembly displacing due to vibration and other reasons when the battery cell is in use, thereby causing damage to the electrode assembly or even a short circuit.

The position-limiting effect of the first insulating block on the second insulating block in at least one of the first direction and the second direction is achieved through clearance fit, which can effectively reduce the possibility of interference between the first insulating block and the second insulating block during assembling, reduce the difficulty in assembling, and avoid the problem of difficult or unsuccessful assembling caused by manufacturing errors of components or errors in the operation of assembling tools.

In some embodiments, the two cover plates further include a second cover plate connected to the end portion opening on the other side of the case. The isolation structure is fixed on a surface of one side of the second cover plate adjacent to the electrode assembly, and is fixedly connected to the supporting member.

The isolation structure arranged on the surface of one side of the second cover plate adjacent to the electrode assembly is capable of separating the second cover plate from the main body part of the electrode assembly, for preventing damage to the electrode assembly caused by collision between the main body part and the second cover plate. Moreover, the isolation structure is further fixedly connected to the supporting member, which can achieve the stability of relative positions between the supporting member and the isolation structure.

In some embodiments, the supporting member has a plurality of hollowed-out or thinned accommodation regions, and the total volume **V1** of the plurality of hollowed-out or thinned accommodation regions and the total volume **V2** of the solid part of the supporting member meet:

$$5\% \leq V1:(V1+V2) \leq 30\%.$$

Since the supporting member will occupy a certain space in the case, in order to reduce the impact of the volume of the supporting member on the space inside the case, a plurality of hollowed-out or thinned accommodation regions are arranged on the supporting member to provide more accommodation space for the electrolyte solution, thereby increasing the amount of electrolyte solution in the battery cell, and improving the cycle life of the battery cell. In addition, the stamping process of the hollowed-out accommodation region is easy to implement, thereby reducing the difficulty of processing, and being conducive to the entry, exit, and flow of the electrolyte solution.

In some embodiments, the plurality of hollowed-out or thinned accommodation regions include: a plurality of circular holes, and the diameter **D** of each circular hole meets:

$$(1/3)*W \leq D \leq (2/3)*W;$$

wherein **W** is the width of the supporting member in the thickness direction of the main body part of the electrode assembly. The circular hole is capable of implementing the accommodation function for the electrolyte solution and gas, and is easy to process and form.

If the diameter of the circular hole is too large, the strength and rigidity of the supporting member will be weakened, thereby affecting the supporting effect of the supporting member on the electrode assembly. If the diameter of the circular hole is too small, the space to accommodate the electrolyte solution will be limited. Therefore, by making the diameter of the circular hole meet a specific size relationship with the width of the supporting member, the amount of the electrolyte solution in the battery cell can be increased and the cycle life of the battery cell can be improved while meeting the reliable supporting effect of the supporting member on the electrode assembly.

In some embodiments, the plurality of hollowed-out or thinned accommodation regions are arranged at equal intervals in the thickness direction of the cover plate.

By arranging the accommodation regions at equal intervals, the impact of the hollowed-out or thinned accommodation regions on the stiffness and strength of the supporting member may be more uniform, thereby avoiding local insufficient strength or local large deformation of the supporting member, and improving the supporting effect of the supporting member on the electrode assembly.

In some embodiments, the battery cell further include:

an insulating member located within the case and wrapping at least a part of the electrode assembly and at least a part of the supporting member, and configured to separate the case from the electrode assembly;

wherein a region of the insulating member wrapping the supporting member has a first positioning hole, the supporting member has a second positioning hole, and the first positioning hole does not overlap with the second positioning hole.

The insulating member can separate a cavity of the case and the electrode assembly to achieve insulation between the electrode assembly and the case. By making the first positioning hole not overlapping with the second positioning hole, the electrode assembly may be effectively prevented from lap-jointing with the case through the second positioning hole and the first positioning hole to cause corrosion of the case.

In some embodiments, the supporting member has a plurality of hollowed-out or thinned accommodation regions, and the second positioning hole is located on one side of the plurality of hollowed-out or thinned accommodation regions adjacent to the end portion of the supporting member.

Arranging the second positioning hole on the supporting member in a position adjacent to the end portion can facilitate the positioning and operation of the supporting member by a positioning device.

In some embodiments, the supporting member has a plurality of hollowed-out or thinned accommodation regions, and a hollowed-out accommodation region among the plurality of hollowed-out or thinned accommodation regions does not overlap with the first positioning hole.

By making the first positioning hole on the supporting member not overlapping with the hollowed-out accommodation region, the electrode assembly may be effectively prevented from lap-jointing with the case through the hollowed-out accommodation region and the first positioning hole to cause corrosion of the case.

In one aspect of the present disclosure, a battery is provided, including the aforementioned battery cell. The battery using the aforementioned battery cell can achieve better reliability in use.

In one aspect of the present disclosure, an electrical device is provided, including the aforementioned battery. The electrical device using the aforementioned battery can achieve better reliability in use.

**Description of Drawings**

In order to illustrate the technical solutions of the embodiments of the present disclosure more clearly, the following briefly introduces the drawings required in the embodiments of the present disclosure. Obviously, the drawings described below are only some embodiments of the present disclosure. For those of ordinary skill in the art, other drawings can also be obtained according to the drawings without any creative efforts.

The present disclosure may be more clearly understood from the following detailed description with reference to the accompanying drawings, in which:

Fig. 1 is a schematic structural diagram of some embodiments of an electrical device according to the present disclosure;

Fig. **2** is a schematic exploded diagram of some embodiments of a battery according to the present disclosure;

Fig. **3** is a schematic exploded diagram of some embodiments of a battery cell according to the present disclosure;

Fig. **4** is an enlarged schematic diagram of a region corresponding to an ellipse **A1** in Fig. **3**;

Fig. **5** is an enlarged schematic diagram of a region corresponding to an ellipse **A2** in Fig. **3**;

Fig. **6** is a schematic structural diagram of an electrode assembly in some embodiments of the battery cell according to the present disclosure;

Fig. **7** is a schematic structural diagram of Fig. **6** from another perspective;

Fig. **8** is a schematic diagram of a section **AA** in Fig. **7**;

Fig. **9** is an enlarged schematic diagram of a region corresponding to a circle **B** in Fig. **8**; and

Fig. **10** is a schematic partial structural diagram of an insulating member wrapping an electrode assembly in some embodiments of the battery cell according to the present disclosure.

It should be understood that the dimensions of the various parts shown in the drawings are not drawn to actual proportion relationships. In addition, the same or similar reference numerals indicate the same or similar components.

List of reference numerals:

**10:** Battery cell;
**20:** Case; **21:** Cavity; **22:** End portion opening;
**30:** Electrode assembly; **31:** Main body part; **32:** Tab;
**40:** End cover assembly; **41:** Cover plate; **411:** First cover plate; **412:** Second cover plate; **42:** Isolation structure; **421:** First insulating block; **422:** Second insulating block; **423:** Third insulating block; **441:**

First terminal post; **442:** Second terminal post; **43:** Hot-melt pillar;

**50:** Supporting member; **51:** First section; **52:** Second section; **53:** Positioning hole; **54:** Adhesive tape; **55:** Second positioning hole; **56:** Accommodation region;

**60:** Insulating member; **61:** First positioning hole;

**70:** Battery; **71:** Box body;

**80:** Vehicle; **81:** Controller; **82:** Motor.

## Detailed Description

The implementations of the present disclosure are further described in detail below with reference to the drawings and embodiments. The following detailed description of the embodiments and the drawings are used to illustrate the principles of the present disclosure by way of example, but should not be used to limit the scope of the present disclosure, that is, the present disclosure is not limited to the described embodiments.

In the description of the present disclosure, it should be noted that, unless otherwise stated, "a plurality of" means two or more; the orientation or positional relationships indicated by the terms "upper," "lower," "left," "right," "inner," "outer," and the like are only for facilitating the description of the present disclosure and simplifying the description, rather than indicating or implying that the apparatus or element referred to must have a particular orientation or be constructed and operated in a particular orientation, and therefore should not be interpreted as limiting the present disclosure. In addition, the terms "first," "second," "third," and the like are used for descriptive purposes only, and cannot be construed as indicating or implying relative importance. "Vertical" is not strictly vertical, but within an allowed error range. "Parallel" is not strictly parallel, but within an allowed error range.

The orientation words appearing in the following description are directions shown in the figures and do not limit the specific structure of the present disclosure. In the description of the present disclosure, it should be further illustrated that, unless otherwise expressly specified and defined, terms "mounted," "connected," and "connection" should be understood broadly, and may be, for example, a fixed connection or detachable connection, or integral connection; and may also be direct connection or indirect connection through an intermediate medium. For those of ordinary skill in the art, the specific meanings of the above terms in the present disclosure may be understood according to specific circumstances.

Some implementations of the present invention are described in detail in the following through the accompanying drawings. Without conflict, features in the following embodiments may be combined together.

In a battery cell of some related arts, an electrode assembly may displace within a case due to changes in a movement state of a battery or due to an external force during the use of the battery cell. The displacement of the electrode assembly may cause pulling of connections between tabs and terminal posts at both ends of a main body part, and cause the risk of loosening of the electrical connection or tearing of the tabs, thereby reducing the reliability of the battery cell.

In view of this, an embodiment of the present disclosure provides a battery cell, a battery, and an electrical device, which can improve the reliability of the battery.

The battery cell in the embodiment of the present disclosure may include a lithium-ion secondary battery, a lithium-ion primary battery, a lithium-sulfur battery, a sodium/lithium-ion battery, a sodium-ion battery, a magnesium-ion battery, or the like, which will not be limited in the embodiments of the present disclosure. The battery cell may be cylindrical, flat, rectangular, or in other shapes, which is not limited in the embodiments of the present disclosure.

The battery cell in the embodiments of the present disclosure is applicable to various types of batteries. The battery may be used for supplying power to an electrical device such as a vehicle, for example, providing a power source for manipulating the vehicle or providing a power source for driving the vehicle. The battery may include a case and a battery module. The case is used for providing an accommodating space for the battery module. The battery module is mounted in the case. The case may adopt a metal material. The battery module may include a plurality of battery cells in series connection, parallel connection, or parallel-series connection. A battery cell is the smallest unit forming the battery. The battery cell includes an electrode assembly that is capable of generating an electrochemical reaction.

The battery in the embodiment of the present disclosure is applicable to various types of electrical devices using batteries. The electrical device may be a mobile phone, a portable apparatus, a laptop, a battery vehicle, an electric vehicle, a ship, a spacecraft, an electronic toy, an electric tool, and the like. For example, the spacecraft includes an airplane, a rocket, a space shuttle, a spaceship, and the like; the electronic toy includes a fixed or mobile electronic toy, such as a game console, an electric vehicle toy, an electric ship toy, an electric aircraft toy, and the like; and the electric tool includes a metal-cutting power tool, a grinding power tool, an assembly power tool, and a railway power tool, such as an electric drill, an electric grinder, an electric wrench, an electric screwdriver, an electric hammer, an electric impact drill, a concrete vibrator, and an electric planer. The electrical device is not specially limited in the embodiments of the present disclosure.

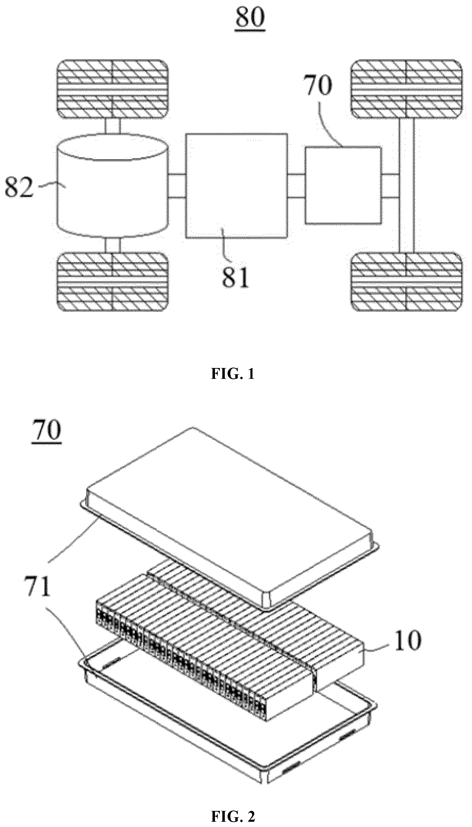

Fig. 1 is a schematic structural diagram of some embodiments of an electrical device according to the present disclosure. For the convenience of description, the electrical apparatus being a vehicle is illustrated as an example. A vehicle **80** may be a fuel vehicle, a gas vehicle, or a new-energy vehicle, and the new-energy vehicle may be an all-electric vehicle or a hybrid vehicle.

For example, a battery **70** may be arranged at the bottom or the head or the tail of the vehicle **80.**

The battery **70** may be used for the power supply of the vehicle **80,** for example, the battery **70** may be used as an operating power source for the vehicle **80,** and used in a circuit system of the vehicle **80,** such as for the working power demand during the start-up, navigation, and operation of the vehicle **80**. In some embodiments, the battery **70** may not only be used as the operating power source of the vehicle **80,** but also may be used as a driving power source of the vehicle **80** to provide driving power for the vehicle **80** in place of or partially in place of fuel or natural gas.

The vehicle **80** may also be equipped with an axle, wheels, a motor **82,** and a controller **81** inside. The controller **81** is used for controlling the battery **70** to power the motor **82**. For example, when the vehicle **80** uses the battery **70** as a driving power source, the controller **81** may provide the motor **82** with the power required for constant speed and acceleration. The motor **82** is used for driving the axle to rotate to drive the wheels to rotate.

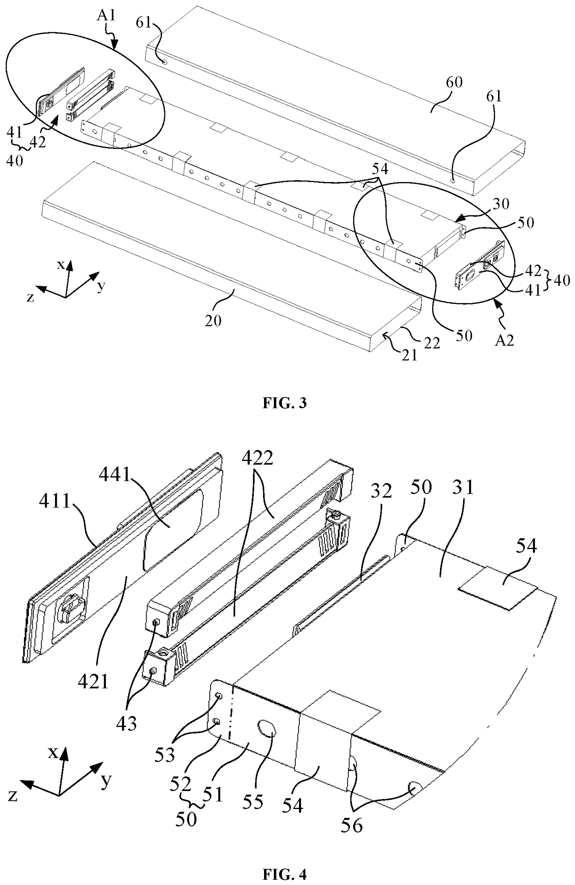

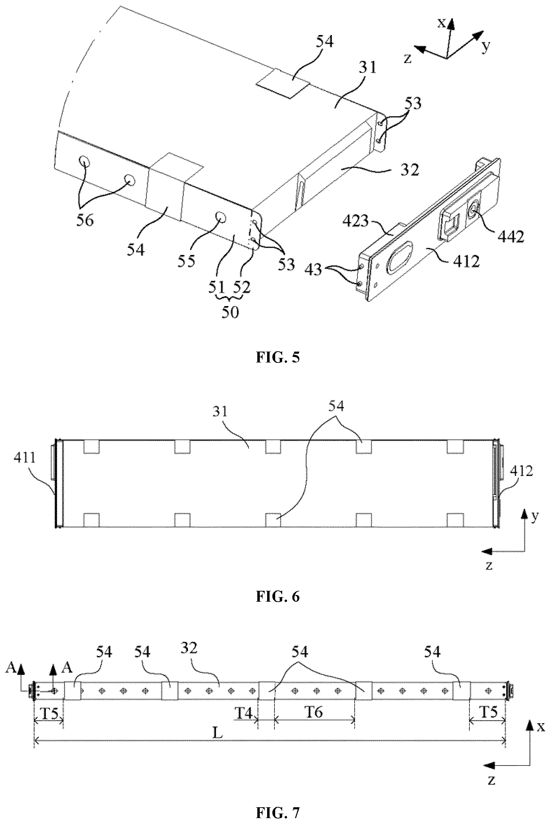

Fig. **2** is a schematic structural diagram of some embodiments of a battery according to the present disclosure. Fig. **3** is a schematic exploded diagram of some embodiments of a battery cell according to the present disclosure. Fig. **4** is an enlarged schematic diagram of a region corresponding to an ellipse **A1** in Fig. **3**. Fig. **5** is an enlarged schematic diagram of a region corresponding to an ellipse **A2** in Fig. **3**.

Referring to Fig. **2,** in some embodiments, the battery **70** includes a box body **71** and one or more battery cells **10** arranged in the box body **71**. The box body **71** can provide the battery cell **10** with functions such as cooling, sealing, and anti-impact, and is further capable of preventing adverse impacts of liquid or other foreign matters on the charging, discharging, or safety of the battery cell.

Referring to Fig. **2,** the various battery cells **10** are electrically connected, such as in series, parallel, or parallel-series connection, to achieve required electrical performance parameters of the battery **70**. A plurality of battery cells **10** are arranged in rows, and one or more rows of battery cells **10** may be arranged in the box body as needed.

In some embodiments, the various battery cells **10** of the battery **70** may be arranged in at least one of the length direction and the width direction of the box body. At least one row or column of battery cells **70** may be arranged according to actual requirements. According to requirements, one or more layers of battery cells **10** may also be arranged in the height direction of the battery **70.**

In some embodiments, the plurality of battery cells **10** may be in series, parallel, or parallel-series connection to form battery modules first, and then the plurality of battery modules may be in series, parallel, or parallel-series connection to form into an entirety accommodated in the box body **71**. In some other embodiments, all the battery cells **10** are directly in series, parallel, or parallel-series connection, and then an entirety composed of all the battery cells **10** may be accommodated in the box body.

Referring to Fig. **3,** in the embodiment of the present disclosure, a battery cell **10** includes: a case **20,** an electrode assembly **30,** a cover plate **41,** an isolation structure **42,** and a supporting member **50**. The case **20** has an end portion opening **22**. The electrode assembly **30** is arranged in the case **20**. The cover plate **41** is arranged on the end portion opening **22**. The isolation structure **42** is arranged on one side of the cover plate **41** adjacent to the electrode assembly **30**. The supporting member **50** is fixedly connected to the isolation structure **42** and configured to support the electrode assembly **30**.

The supporting member **50** is fixedly connected to the isolation structure **42** to achieve stability of relative positions between the supporting member **50** and the isolation structure **42,** and achieves a supporting function of the electrode assembly **30** in the case **20** by using the stiffness of the supporting member **50** itself to control the movement and deformation of the electrode assembly **30** in the case **20,** and inhibit the displacement of the electrode assembly **30,** thereby effectively protecting the electrode assembly **30** and improving the reliability of the battery cell.

A cavity **21** of the case **20** may be used for accommodating the electrode assembly **30** and may accommodate an electrolyte solution. The end portion opening **22** is used for allowing the electrode assembly **30** to enter the cavity **21** through the end portion opening **22** when the battery cell is mounted. The shape of the case **20** may be determined according to the shape of one or more electrode assemblies **30** accommodated in the cavity. For example, the shape of the case **20** may be a hollow cuboid, a hollow cube, or a hollow cylinder. The case **20** may be made of metal (such as aluminum and aluminum alloy) or a non-metal material (plastic) with certain hardness and strength.

The cover plate **41** is arranged on the end portion opening **22** for closing the end portion opening **22,** and forms a sealed cavity with the case **20** to accommodate the electrode assembly **30**. The cover plate **41** may be made of metal (such as aluminum and aluminum alloy) or a non-metal material (plastic) with certain hardness and strength. The cover plate **41** and the case **20** may be fixedly connected by welding, bonding, or connecting through connectors. Some functional components may be provided on the cover plate **41,** such as a terminal post for electrical connection with the electrode assembly, a liquid injection mechanism, and a pressure relief mechanism.

The case **20** may have one or two end portion openings **22,** and accordingly, one or two cover plates **41** may be used for covering. In some embodiments, the battery cell **10** includes two cover plates **41,** two end portion openings **22** are respectively provided at both ends of the case **20,** and each of the cover plates **41** is arranged on the corresponding end portion opening **22**. The two cover plates are respectively arranged on the end portion openings at both ends of the case, for closing the end portion openings, so that the two cover plates and the case jointly form a sealed cavity for accommodating the electrode assembly, thereby effectively protecting the electrode assembly and ensuring that the electrode assembly is capable of working stably for a long time. In some other embodiments, the battery cell **10** may include a cover plate **41,** one end of the case **20** is closed, and the other end has the end portion opening **22,** and the cover plate **41** is arranged on the end portion opening **22.**

The isolation structure **42** is arranged between the cover plate **41** and at least a part of the electrode assembly **30** (for example, the main body part **31** of the electrode assembly **30**). A tab **32** of the electrode assembly **30** may pass through the isolation structure **42** to be electrically connected to the terminal post arranged on the cover plate **41.**

In Fig. **4,** the cover plate **41** may include a first cover plate **411,** and the first cover plate **411** is connected to the end portion opening **22** on one side of the case **20.** The isolation structure **42** may include: a first insulating block **421** and a second insulating block **422.** The first insulating block **421** is fixed on a surface of one side of the first cover plate **411** adjacent to the electrode assembly **30,** and at least a part of the second insulating block **422** is located between the first insulating block **421** and the main body part **31** of the electrode assembly **30,** and fixedly connected to the supporting member **50.**

The isolation structure **42** separates the first cover plate **411** and the main body part **31** of the electrode assembly **30** through the second insulating block **422** to prevent damage to the electrode assembly **30** caused by collision between the main body part **31** and the first cover plate **411,** and the second insulating block **422** is fixedly connected to the supporting member **50,** which can achieve the stability of the relative positions between the supporting member **50** and the isolation structure **42.** By arranging at least a part of the second insulating block **422** between the first insulating block **421** fixed on the surface of the first cover plate **411** and the main body part **31,** the second insulating block **422** can play a position-limiting role on the main body part **31,** thereby avoiding the risk of the main body part **31** displacing due to vibration and other reasons when the battery cell is in use to cause damage to the electrode assembly **30** or even a short circuit.

Referring to FIG. **4,** in some embodiments, the first insulating block **421** is configured to limit the position of the second insulating block **422** in at least one of the first direction x and the second direction y, and is in clearance fit with the second insulating block **422** in at least one of the first direction x and the second direction y, and the first direction x and the second direction y are perpendicular to each other and both are perpendicular to the thickness direction z of the cover plate **41.**

For the flat box-shaped electrode assembly **30,** the first direction x may be the thickness direction of the electrode assembly **30.** For the plate-shaped supporting member **50,** the second direction y may be the thickness direction of the supporting member **50.**

The isolation structure **42,** by using the first insulating block **421** to limit the position of the second insulating block **422** in at least one of the first direction x and the second direction y, in cooperation with the fixed connection between the second insulating block **422** and the supporting member **50** and the position-limiting effect on the main body part **31,** effectively limits the relative positions between the electrode assembly **30** and the first cover plate **411,** thereby reducing the risk of the electrode assembly **30** displacing due to vibration and other reasons when the battery cell is in use to cause damage to the electrode assembly **30** or even a short circuit.

The position-limiting effect of the first insulating block **421** on the second insulating block **422** in at least one of the first direction x and the second direction y is achieved through clearance fit, which can effectively reduce the possibility of interference between the first insulating block **421** and the second insulating block **422** during assembling, reduce the difficulty in assembling, and avoid the problem of difficult or unsuccessful assembling caused by manufacturing errors of components or errors in the operation of assembling tools.

The first insulating block **421** and the second insulating block **422** may be made of an insulating material such as plastic. In order that the tab **32** of the electrode assembly **30** is capable of being electrically connected to a first terminal post **441** arranged on the first cover plate **411,** the second insulating block **422** may be provided with a channel for the tab **32** to pass through. The second insulating block **422** may adopt a split structure. The combined second insulating block **422** may form a channel for guiding the tab **32** to pass through. The tab **32** may be bent in a space surrounded by the second insulating block **422** and the first cover plate **411,** and then achieve a reliable electrical connection with an end surface of the terminal post **411.**

In Fig. **5,** the two cover plates **41** further include a second cover plate **412.** A second terminal post **442** with an opposite polarity to the first terminal post **441** may be arranged on the second cover plate **412.** The second terminal post **442** is electrically connected to the tab **32** on the other side of the main body part **31** of the electrode assembly **30.** The second cover plate **412** is connected to the end portion opening **22** on the other side of the case **20.** The isolation structure **42** (that is, a third insulating block **423**) is fixed on a surface of one side of the second cover plate **412** adjacent to the electrode assembly **30** and is fixedly connected to the supporting member **50.** The third insulating block **423** may also be made of an insulating material such as plastic.

The isolation structure arranged on the surface of one side of the second cover plate **412** adjacent to the electrode assembly **30** is capable of separating the second cover plate **412** from the main body part **31** of the electrode assembly **30,** for preventing damage to the electrode assembly **30** caused by collision between the main body part **31** and the second cover plate **412.** Moreover, the isolation structure **42** is further fixedly connected to the supporting member **50,** which can achieve the stability of relative positions between the supporting member **50** and the isolation structure **42.**

The electrode assembly **30** may include a positive electrode plate, a negative electrode plate, and a separator arranged between the positive electrode plate and the negative electrode plate. The battery cell operates mainly relying on movement of metal ions between the positive electrode plate and the negative electrode plate.

The positive electrode plate may include a positive electrode current collector and a positive electrode active material layer. A positive tab is connected to or formed on the positive electrode current collector. Taking a lithium-ion battery as an example, the material of the positive electrode current collector may be aluminum, and the positive electrode active material may be lithium cobalt oxide, lithium iron phosphate, ternary lithium, lithium manganate, or other lithium compounds that can provide lithium ions. When a binding material is used to bond the positive electrode current collector and the positive electrode active material layer, the binding material may be **Polyvinylidene Fluoride (PVDF),** and the like.

The negative electrode plate includes a negative electrode current collector and a negative electrode active material layer. The negative tab is connected to the negative electrode current collector. Taking a lithium-ion battery as an example, the material of the negative electrode current collector may be copper, and the negative electrode active material may be graphite, silicon, lithium titanate, and other substances that can store lithium ions. When a binding material is used to bond the negative electrode current collector and the negative electrode active material layer, the binding material may be Carboxyl methyl Cellulose, epoxy resin, styrene-butadiene rubber, and the like.

The material of the separator may be **polypropylene (PP), polyethylene (PE),** or the like. The electrolyte solution includes an electrolyte and a solvent. The electrolyte is an organic metal salt, an inorganic salt, or the like, which can provide metal ions that shuttle between the positive electrode plate and the negative electrode plate. To ensure sufficient overcurrent capacity, there may be a plurality of positive tabs stacked together, and there may be a plurality of negative tabs stacked together. In addition, the electrode assembly may be of a wound structure or a laminated structure, which is not limited in the embodiments of the present disclosure.

Referring to Fig. **3** to Fig. **5,** the thickness direction z of the cover plate **41** may be parallel to the length direction of the flat box-shaped electrode assembly **30.** The thickness direction (that is, the first direction x) of the flat box-shaped electrode assembly **30** is perpendicular to the thickness direction z of the cover plate **41.** For the plate-shaped supporting member **50,** the thickness direction (that is, the second direction y) of the supporting member **50** is perpendicular to the thickness direction z of the cover plate **41** and is also perpendicular to the thickness direction of the electrode assembly **30.**

In some embodiments, the supporting member **50** may be fixedly connected to the outer contour of the electrode assembly **30** to provide a supporting function for the electrode assembly **30** while separating the electrode assembly **30** from an inner wall of the case **20.** In some other embodiments, the supporting member **50** may not be connected to the outer contour of the electrode assembly **30** while implementing the function of separating the electrode assembly **30** from the inner wall of the case **20.**

Referring to Fig. **4** and Fig. **5,** in some embodiments, the supporting member **50** is a plate-shaped supporting member, and the supporting member **50** includes a first section **51** and a second section **52** (divided by double-dot dash lines in Fig. **4** and Fig. **5).** The first section **51** is arranged opposite to the main body part **31** of the electrode assembly **30** in the thickness direction of the supporting member **50,** and the second section **52** is located on at least one side of the first section **51** in the thickness direction z of the cover plate **41,** and the second section **52** protrudes from the main body part **31** of the electrode assembly **30** in the thickness direction z of the cover plate **41.** The second section **52** is fixedly connected to the isolation structure **42.**

The first section **51** of the supporting member **50** is arranged opposite to the main body part **31** of the electrode assembly **30** in the thickness direction of the supporting member **50,** which is equivalent to that the length of the first section **51** in the thickness direction z of the cover plate **41** overlaps with the length of the main body part **31** of the electrode assembly **30** in the thickness direction z of the cover plate **41,** and can effectively isolate the main body part **31** of the electrode assembly **30** from the case **20.** The second section **52** is located on at least one side of the first section **51** in the thickness direction z of the cover plate **41,** and the second section **52** protrudes from the main body part **31** in the thickness direction z of the cover plate **41,** which is equivalent to that the length of the second section **52** in the thickness direction z of the cover plate **41** does not overlap with the length of the main body part **31** of the electrode assembly **30** in the thickness direction z of the cover plate **41.** In this way, the second section **52,** when fixedly connected to the isolation structure **42,** avoids interference from the main body part **31,** so that the isolation structure **42** is capable of having a sufficient space to connect the second section **52,** thereby improving the reliability of the connection between the isolation mechanism **42** and the supporting member **50.**

In some embodiments, a surface of one side of the first section **51** of the supporting member **50** adjacent to the main body part **31** is fixedly connected to the main body part **31.** The supporting member **50** is fixedly connected to the main body part **31** through the first section

51, and is fixedly connected to the isolation structure 42 through the second section 52, so that the supporting function of the electrode assembly 30 in the case 20 can be achieved by using the stiffness of the supporting member 50 itself to control the movement and deformation of the electrode assembly 30 in the case 20, and inhibit the displacement of the electrode assembly 30 in the case, thereby reducing the risk of a tab 32 being torn due to the displacement of the main body part 31.

Further, the surface of one side of the first section 51 adjacent to the main body part 31 may be in integral contact with the main body part 31. For example, the first section 51 is integrally fixed to the side of the main body part 31 by means of an adhesive tape 34. The overall contact here may be that a surface of the first section 51 is completely attached to an outer surface of the main body part 31, or it may be that a peripheral region of the first section 51 is attached to the outer surface of the main body part 31.

The first section 51 of the supporting member 50 is in integral contact with and fixedly connected to the main body part 31. In this way, the supporting member 50 forms a wider range of supporting function for the main body part 31 in the thickness direction z of the cover plate 41, and controls the deformation of the electrode assembly 30 in the case 20 more effectively, so that it is difficult for the main body part to collide or rub against the inner wall of the case due to deformation, thereby reducing the risk of corrosion of the case or even short circuit caused by the electrode assembly 30 contacting the inner wall of the case 20, effectively protecting the electrode assembly 30, and improving the reliability of the battery cell.

The supporting member 50 may extend in the length direction of the electrode assembly 30 and be located on at least one side of the electrode assembly 30. In Fig. 3, for the flat-shaped electrode assembly 30, the supporting member 50 may be a plate-shaped supporting member and is respectively arranged on narrow edges at both sides of the electrode assembly 30 to serve as a side supporting plate. The supporting member 50 may be made of a material with certain strength and rigidity, such as plastic.

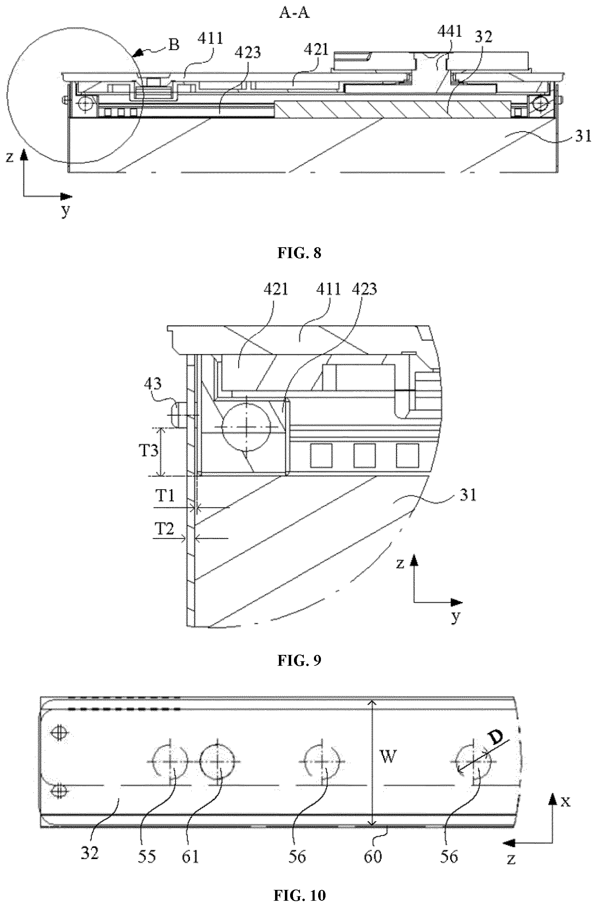

Fig. 6 is a schematic structural diagram of an electrode assembly in some embodiments of the battery cell according to the present disclosure. Fig. 7 is a schematic structural diagram of Fig. 6 from another perspective. Fig. 8 is a schematic diagram of a section AA in Fig. 7. Fig. 9 is an enlarged schematic diagram of a region corresponding to a circle B in Fig. 8.

Referring to Fig. 8 and Fig. 9, the second section 52 and the isolation structure 42 may be fixedly connected in various manners, for example, fixedly connected by hot melting. The fixed connection by hot melting is easy to implement in terms of technology. Moreover, when the second section beyond the main body part is hot-melt connected to the isolation structure, a relatively sufficient hot-melt space can be obtained to ensure the reliability of the hot-melt connection.

Referring to Fig. 4, Fig. 5, and Fig. 9, in some embodiments, the hot-melt connection structure between the second section 52 and the isolation structure 42 includes a positioning hole 53 and a hot-melt pillar 43. The hot-melt pillar 43 passes through the positioning hole 33 and is hot-melt connected to the positioning hole 33. The positioning hole 33 may be opened in the second section 52, and accordingly the hot-melt pillar 43 is located on the surface of the isolation structure 42.

By passing the hot-melt pillar 43 through the positioning hole 53, the positioning function before hot-melt connection can be realized, thereby limiting the relative positions between the supporting member 50 and the isolation structure 42, and ensuring a reliable hot-melt connection between the supporting member 50 and the isolation structure 42 while avoiding the displacement between the supporting member 50 and the isolation structure 42 during the hot-melt connection, which is beneficial to the accuracy of subsequent assembling.

In some embodiments, in the thickness direction of the plate-shaped supporting member, there is a gap T1 between the surface of one side of the second section 52 adjacent to the isolation structure 42 and the isolation structure 42. When the second section is fixedly connected to the isolation structure, the fixed connection structure may cause deformation of the supporting member. For example, when the second section 52 is heat-melt fixed to the isolation structure 42, the stress at a hot-melt part may cause deformation of the supporting member 50, and the supporting member 50 may affect the fixed connection between the supporting member 50 and the electrode assembly 30. Setting the gap T1 between the surface of one side of the second section 52 adjacent to the isolation structure 42 and the isolation structure 42 can reduce the stress in the hot-melt part, thereby reducing the deformation of the supporting member 50.

The thickness of the supporting member 50 affects the stiffness of the supporting member 50 itself. Setting the gap T1 according to the thickness of the supporting member 50 can control the reasonable deformation amount of the supporting member 50 during hot-melt fixation, and ensure the reliable connection between the supporting member 50 and the electrode assembly 30. If the height of the gap T1 is too high or too low, when the second section 52 is hot-melt fixed to the isolation structure 42, the hot-melt part may form a stress that pulls or squeezes the second section 52, so that the hot-melting effect becomes worse, resulting in a significant deformation of the first section 51 that is fixedly connected to the outer contour of the electrode assembly 30, which may affect the reliable connection between the supporting member 50 and the electrode assembly 30.

In Fig. 9, the supporting member 50 is a plate-shaped supporting member, and T1 may meet: $0.2*T2 \leq T1 \leq T2$. For example, the value of T1 may be $0.4*T2$, $0.65*T2$, and $0.8*T2$. T2 is the thickness of the plate-shaped supporting member. Here, by making the gap **T1** meet the specific size relationship with the thickness of the supporting member **50,** the hot-melt effect of the hot-melt connection between the second section **52** and the isolation structure **42** may be improved and the deformation of the first section **51** of the supporting member **50** may be reduced, which is conducive to achieving a reliable connection between the supporting member **50** and the electrode assembly **30.**

As mentioned above, the thickness of the supporting member **50** affects the stiffness of the supporting member **50** itself, and therefore, the position of the hot-melt part relative to the isolation structure **42** is set according to the thickness of the supporting member **50,** which can control the reasonable deformation amount of the supporting member **50** during hot-melt fixation, and ensure the reliable connection between the supporting member **50** and the electrode assembly **30.** If the hot-melt part is too close to the end portion of the isolation structure **42,** the hot-melt range may be limited and it may be difficult to achieve a reliable connection, which may affect the hot-melt effect. For the hot-melt part, if the hot-melt part is too far away from the end portion of the isolation structure **42,** an isolation structure **42** with a thicker size is required, which affects the length of the electrode assembly **30,** thereby affecting the capacity of the battery cell **10.**

In Fig. **9,** the supporting member **50** is a plate-shaped supporting member, and the minimum distance **T3** from the hot-melt part of the second section **52** and the isolation structure **42** to an end portion of one side of the isolation structure **42** adjacent to the electrode assembly **30** in the length direction of the electrode assembly **30** may meet: **4*T2≤T3≤15*T2.** For example, the value of **T3** may be **6*T2, 9.5*T2, 12*T2, 13.5*T2,** and the like. **T2** is the thickness of the plate-shaped supporting member. Here, by making the minimum distance of the hot-melt part relative to the end portion of the isolation structure **42** meet the specific size relationship with the thickness of the supporting member **50,** the hot-melt effect can be improved, thereby realizing a reliable connection between the supporting member **50** and the electrode assembly **30,** and improving the capacity of the battery cell **10.**

Referring to Fig. **4** to Fig. **5** and Fig. **8** to Fig. **9,** in some embodiments, the hot-melt connection structure between the second section **52** and the isolation structure **42** includes a positioning hole **33** located on the second section **52** and a hot-melt pillar **43** located on the surface of the isolation structure **42.** The hot-melt pillar **43** passes through the positioning hole **33** and is hot-melt connected to the positioning hole **33.** In this embodiment, by allowing the hot-melt pillar **43** on the isolation structure **42** to pass through the positioning hole **33** on the second section **52,** the hot-melt part can be effectively positioned, thereby facilitating performing a hot-melt operation on one side of the second section **52** away from the isolation structure **42** through a hot-melt device.

Referring to Fig. 3 to Fig. **5,** the second sections **52** at both ends of the supporting member **50** may be each provided with at least one positioning hole **33,** and side surfaces of the second insulating block **422** and the third insulating block **423** may be each provided with at least one hot-melt pillar **43.** During specific mounting, the hot-melt pillars **43** on the second insulating block **422** and the third insulating block **423** may be inserted into the positioning holes **33** for positioning, and then the hot-melt pillars **43** are heated by the hot-melt device to melt. The melted material may be combined with the supporting member **50** to achieve a reliable fixed connection.

The electrode assembly **30** and the supporting member **50** may be fixedly connected in various manners. In some embodiments, the main body part **31** of the electrode assembly **30** and the supporting member **50** are fixed by bonding with an adhesive tape **54.** The supporting member **50** and the main body part 31 of the electrode assembly **30** are fixed by bonding with the adhesive tape **54,** so that the connection operation of the supporting member **50** and the main body part **31** is more convenient, and there is no need to provide other structures for connection on the supporting member **50** and the electrode assembly **30.** When the main body part **31** and the supporting member **50** are bonded by the adhesive tape **54,** a long whole section of adhesive tape may be used for bonding, or a plurality of adhesive tapes **34** may also be used for bonding.

Referring to Fig. **3** and Fig. **7,** in some embodiments, the electrode assembly **30** and the supporting member **50** are fixed by bonding with a plurality of adhesive tapes **34,** and the plurality of adhesive tapes **34** are arranged at intervals in the thickness direction z of the cover plate **41.** Compared with the method of fixing the electrode assembly **30** and the supporting member **50** by bonding with a long whole section of adhesive tape **34,** a plurality of adhesive tapes **34** arranged at intervals can meet the requirement of fixed connection while saving the amount of adhesive tape and saving costs.

When the plurality of adhesive tapes **34** arranged at intervals in the thickness direction z of the cover plate **41** are used to achieve the fixed connection between the electrode assembly **30** and the supporting member **50,** an excessively wide adhesive tape **34** requires a larger amount of adhesive tape and increases the cost, while an excessively narrow adhesive tape **34** cannot achieve sufficient connection strength and thus affecting the reliability of the fixed connection.

In Fig. **7,** the width **T4** of each adhesive tape **34** may meet: **0.02*L≤T4≤0.2*L.** For example, the value **of T4** may be **0.03*L, 0.075*L, 0.12*L, 0.16*L,** and the like. L is the length of the supporting member **50** in the length direction of the electrode assembly **30.** Here, by making the width of the adhesive tape **34** meet the specific size relationship with the length of the supporting member **50,** the amount of adhesive tape can be saved as much as possible and the costs can be reduced while ensuring the reliable fixed connection between the supporting member **50** and the electrode assembly **30.**

In Fig. **7,** the supporting member **50** has two end portions in the thickness direction z of the cover plate **41,** and spacings between two adhesive tapes **34** respectively adjacent to the two end portions among the plurality of adhesive tapes **34** and the corresponding end portions are **T5.** The spacing **T5** reflects the position of an outermost adhesive tape **34** among the plurality of adhesive tapes **34** on the supporting member **50.** When the outermost adhesive tape **34** adheres and fixes the supporting member **50,** lifting of the end portion of the supporting member **50** can be effectively controlled.

If the spacing **T5** is too large, the effect of lifting of the end portion of the supporting member **50** will be affected. If the spacing **T5** is too small, the fixed connection region (for example, the hot-melt connection region) between the supporting member **50** and the isolation structure **42** may be restricted.

In some embodiments, the spacing **T5** meets: **0.04*L≤T5≤0.2*L.** For example, the value of **T5** may be **0.06*L, 0.085*L, 0.13*L, 0.175*L,** and the like. **L** is the length of the supporting member **50** in the length direction of the electrode assembly **30.** Here, by making the spacing **T5** meet the specific size relationship with the length L of the supporting member **50,** the influence on the hot-melt region can be reduced and the lifting of the end portion of the supporting member **50** can be alleviated.

In Fig. **7,** in the thickness direction z of the cover plate **41,** a plurality of adhesive tapes **34** are arranged at intervals being spacings **T6,** and the spacings **T6** may be equal or unequal. The plurality of adhesive tapes arranged at intervals allow the fixed connection function of the adhesive tapes **34** be distributed evenly in the length direction of the electrode assembly **30,** which effectively controls the deformation of different positions of the supporting member **50,** thereby achieving a more reliable fixed connection relationship between the electrode assembly **30** and the supporting member **50.**

An excessively large spacing **T6** affects the connection strength between the electrode assembly **30** and the supporting member **50,** while an excessively small spacing **T6** may increase the amount of adhesive tape, increase costs, and also increase the process of pasting the adhesive tape **34.** In some embodiments, the spacing **T6** between adjacent adhesive tapes **34** in the plurality of adhesive tapes **34** meets: **0.1*L≤T6≤0.5*L.** For example, the value of **T6** may be **0.2*L, 0.36*L, 0.42*L,** and the like. L is the length of the supporting member **50** in the thickness direction z of the cover plate **41.** Here, by making the spacing of the adjacent adhesive tapes **34** meet the specific size relationship with the length of the supporting member **50,** the amount of adhesive tape can be saved as much as possible, the costs can be reduced, and the process can be saved while ensuring the reliable fixed connection between the supporting member **50** and the electrode assembly **30.**

When mounted in the case **20,** the supporting member **50** may occupy a certain space, which accordingly reduces the amount of electrolyte solution that can be accommodated in the case **20.** In order to influence of the volume of the supporting member **50** on the space within the case **20,** referring to Fig. **3** to Fig. **7,** in some embodiments, the supporting member **50** has a plurality of hollowed-out or thinned accommodation regions **56.** Here, the hollowed-out accommodation region **56** may include a through hole that penetrates the supporting member **50** in the thickness direction of the supporting member **50,** and the thinned accommodation region may include a blind hole with a closed bottom.

The total volume **V1** of the plurality of hollowed-out or thinned accommodation regions **56** and the total volume **V2** of the solid part of the supporting member **50** may meet: **5%≤V1:(V1+V2)≤30%,** for example, the value of **V1:(V1+V2)** is **10%, 15%, 20%, 25%,** and the like. By arranging the plurality of hollowed-out or thinned accommodation regions **56** on the supporting member **50,** more accommodation space is provided for the electrolyte solution and the amount of electrolyte solution in the battery cell **10** is increased, thereby improving the cycle life of the battery cell **10.** In addition, the stamping process of the hollowed-out accommodation region **56** is easy to implement, thereby reducing the difficulty of processing, and being conducive to the entry, exit, and flow of the electrolyte solution.

Fig. **10** is a schematic partial structural diagram of an insulating member wrapping a chip assembly in some embodiments of the battery cell according to the present disclosure. The shape and size of the accommodation region **56** may be designed according to strength and stiffness requirements of the supporting member **50** itself, and a situation of being able to reduce the volume occupied by the supporting member **50.** Referring to Fig. **4,** Fig. **5,** Fig. **7,** and Fig. **10,** in some embodiments, the plurality of hollowed-out or thinned accommodation regions **56** include: a plurality of circular holes.

The circular hole is capable of implementing the accommodation function for the electrolyte solution and gas, and is easy to process and form. If the diameter of the circular hole is too large, the strength and rigidity of the supporting member **50** will be weakened, thereby affecting the supporting effect of the supporting member **50** on the electrode assembly **30.** If the diameter of the circular hole is too small, the space to accommodate the electrolyte solution will be limited.

Referring to Fig. **10,** the diameter **D** of each circular hole meets: **(1/3)*W≤D≤(2/3)*W.** For example, the value of **D** may be **(4/9)*W, (1/2)*W, (5/9)W,** and the like. **W** is the width of the supporting member **50** in the thickness direction x of the electrode assembly **30.** Here, by making the diameter of the circular hole meet a specific size relationship with the width of the supporting member **50,** the amount of the electrolyte solution in the battery cell **10** can be increased and the cycle life of the battery cell **10** can be improved while meeting the reliable supporting effect of the supporting member **50** on the electrode assembly **30.**

Referring to Fig. **3,** in some embodiments, the plurality of hollowed-out or thinned accommodation regions **56** are arranged at equal intervals in the length direction of the electrode assembly **30.** By arranging the accommodation regions **56** at equal intervals, the impact of the hollowed-out or thinned accommodation regions **56** on the stiffness and strength of the supporting member **50** may be more uniform, thereby avoiding local insufficient strength or local large deformation of the supporting member **50,** and improving the supporting effect of the supporting member **50** on the electrode assembly **30.**

In order to prevent the electrode assembly **30** from directly contacting the inner wall of the case **20,** referring to Fig. **3** and Fig. **10,** in some embodiments, the battery cell **10** further includes an insulating member **60** located within the case **20.** The insulating member **60** wraps at least a part of the electrode assembly **30** and at least a part of the supporting member **50,** and is capable of separating the cavity **21** of the case **20** from the electrode assembly **30.** Regarding the insulating member **60,** it may include an insulating thin layer (for example, a Mylar film) formed by wrapping a thin film of an insulating material on the electrode assembly **30.** The insulating member **60** may wrap the electrode assembly **30** and the supporting member **50** together.

When assembling the insulating member **60** and the electrode assembly **30,** a grabbing apparatus having a positioning mechanism is usually used to grab the insulating member **60,** wherein the positioning mechanism is positioned through a first positioning hole on the insulating member **60.** The supporting member **50** may also be provided with a second positioning hole for assembling and positioning.

In Fig. **3** and Fig. **10,** a region of the insulating member **60** wrapping the supporting member **50** has a first positioning hole **61,** and the supporting member **50** has a second positioning hole **55.** The second positioning hole **55** may be located on one side of the plurality of hollowed-out or thinned accommodation regions **56** adjacent to the end portion of the supporting member **50,** such that the second positioning hole **55** is located in a position adjacent to the end portion of the supporting member **50,** thereby facilitating the positioning and operation of the supporting member **50** by the positioning device.

Referring to Fig. **10,** the first positioning hole **61** does not overlap with the second positioning hole **55,** and in this way, the electrode assembly **30** may be effectively prevented from lap-jointing with the case **20** through the second positioning hole **55** and the first positioning hole **61** to cause corrosion of the case **20.** As may be seen from Fig. **10,** the first positioning hole **61** is located on the right side of the second positioning hole **55,** and it is difficult for the active material falling off from the electrode assembly **30** to reach the inner wall of the case **20** through the second positioning hole **55** and the first positioning hole **61.**

Referring to Fig. **10,** in some embodiments, the plurality of hollowed-out accommodation regions **56** on the supporting member **50** do not overlap with the first positioning hole **61.** In this way, it can effectively prevent the electrode assembly **30** from lap-jointing with the case **20** through the hollowed-out accommodation region **56** and the first positioning hole **61** to cause corrosion of the case **20.** As may be seen from Fig. **10,** the first positioning hole **61** is located on the left side of the hollowed-out accommodation region **56,** and it is difficult for the active material falling off from the electrode assembly **30** to reach the inner wall of the case **20** through the hollowed-out accommodation region **56** and the first positioning hole **61.**

Based on the foregoing embodiments of the battery cell of the present disclosure, the present disclosure further provides embodiments of batteries employing the foregoing embodiments of the battery cell. The battery includes the battery cell of any of the aforementioned embodiments. The battery using the aforementioned embodiments of the battery cell can achieve better reliability in use.

In one aspect of the present disclosure, an electrical device is provided, including the aforementioned battery. The electrical device using the aforementioned battery can achieve better reliability in use.

Although the present disclosure has been described with reference to the preferred embodiments, various improvements may be made thereto and components thereof may be replaced with equivalents without departing from the scope of the present disclosure. In particular, the technical features mentioned in the various embodiments may be combined in any manner as long as there is no structural conflict. The present disclosure is not limited to the particular embodiments disclosed herein, and includes all technical solutions falling within the scope of the claims.

**Claims**

1. A battery cell (**10**), comprising:

   a case (**20**) having an end portion opening (**22**);
   an electrode assembly (**30**) arranged in the case (**20**);
   a cover plate (**41**) arranged on the end portion opening (**22**);
   an isolation structure (**42**) arranged on one side of the cover plate (**41**) adjacent to the electrode assembly (**30**); and
   a supporting member (**50**) fixedly connected to the isolation structure (**42**) and configured to support the electrode assembly (**30**).

2. The battery cell (**10**) according to claim **1,** wherein the supporting member (**50**) is a plate-shaped supporting member, and the supporting member (**50**) comprises:

a first section (**51**), wherein the first section (**51**) is arranged opposite to a main body part (**31**) of the electrode assembly (**30**) in a thickness direction of the supporting member (**50**); and
a second section (**52**), wherein the second section (**52**) is located on at least one side of the first section (**51**) in a thickness direction (**z**) of the cover plate (**41**), and the second section (**52**) protrudes from the main body part (**31**) of the electrode assembly (**30**) in the thickness direction (**z**) of the cover plate (**41**), wherein the second section (**52**) is fixedly connected to the isolation structure (**42**).

3. The battery cell (**10**) according to claim **2,** wherein a surface of one side of the first section (**51**) adjacent to the main body part is fixedly connected to the main body part (**31**).

4. The battery cell (**10**) according to claim **3,** wherein the surface of one side of the first section (**51**) adjacent to the main body part is in integral contact with the main body part (**31**).

5. The battery cell (**10**) according to any one of claims **2** to **4,** wherein the second section (**52**) is fixedly connected to the isolation structure (**42**) by hot melting.

6. The battery cell (**10**) according to claim **5,** wherein the hot-melt connection structure between the second section (**52**) and the isolation structure (**42**) comprises a positioning hole (**33**) and a hot-melt pillar (**43**), and the hot-melt pillar (**43**) passes through the positioning hole (**33**) and is hot-melt connected to the positioning hole (**33**).

7. The battery cell (**10**) according to any one of claims **2** to **6,** wherein in the thickness direction of the plate-shaped supporting member, there is a gap **T1** between the surface of one side of the second section (**52**) adjacent to the isolation structure (**42**) and the isolation structure (**42**).

8. The battery cell (**10**) according to claim **7,** wherein **T1** meets:

$$0.2*T2 \le T1 \le T2;$$

wherein **T2** is the thickness of the plate-shaped supporting member.

9. The battery cell (**10**) according to any one of claims **2** to **8,** wherein in the thickness direction (**z**) of the cover plate (**41**), the minimum distance **T3** from a connection part of the second section (**52**) and the isolation structure (**42**) to an end portion of one side of the isolation structure (**42**) adjacent to the main body part (**31**) meets:

$$4*T2 \le T3 \le 15*T2;$$

wherein **T2** is the thickness of the plate-shaped supporting member.

10. The battery cell (**10**) according to any one of claims **1** to **9,** wherein the main body part (**31**) of the electrode assembly (**30**) and the supporting member (**50**) are fixed by bonding with an adhesive tape (**54**).

11. The battery cell (**10**) according to claim **10,** wherein the main body part (**31**) of the electrode assembly (**30**) and the supporting member (**50**) are fixed by bonding with a plurality of adhesive tapes (**54**), and the plurality of adhesive tapes (**54**) are arranged at intervals in the thickness direction (**z**) of the cover plate (**41**).

12. The battery cell (**10**) according to claim **11,** wherein in the thickness direction (**z**) of the cover plate (**41**), the width **T4** of each adhesive tape (**54**) meets:

$$0.02*L \le T4 \le 0.2*L;$$

wherein L is the length of the supporting member (**50**) in the thickness direction (**z**) of the cover plate (**41**).

13. The battery cell (**10**) according to claim **11,** wherein the supporting member (**50**) has two end portions in the thickness direction (**z**) of the cover plate (**41**), and spacings **T5** between two adhesive tapes (**34**) respectively adjacent to the two end portions among the plurality of adhesive tapes (**54**) and the corresponding end portions meet:

$$0.04*L \le T5 \le 0.2*L;$$

wherein L is the length of the supporting member (**50**) in the thickness direction (**z**) of the cover plate (**41**).

14. The battery cell (**10**) according to claim **11,** wherein in the thickness direction (**z**) of the cover plate (**41**), a spacing **T6** between adjacent adhesive tapes (**54**) among the plurality of adhesive tapes (**54**) meets:

$$0.1*L \le T6 \le 0.5*L;$$

wherein L is the length of the supporting member (**50**) in the thickness direction (**z**) of the cover plate (**41**).

15. The battery cell (**10**) according to any one of claims **1** to **14,** wherein the battery cell (**10**) comprises two cover plate (**41**), two end portion openings (**22**) are respectively provided at both ends of the case (**20**), and each of the cover plates (**41**) is arranged on the corresponding end portion opening (**22**).

16. The battery cell according to claim **15,** wherein the two cover plates (**41**) comprise a first cover plate (**411**) connected to the end portion opening (**22**) on one side of the case (**20**); the isolation structure (**42**) comprises: a first insulating block (**421**) and a second insulating block (**422**), the first insulating block (**421**) is fixed on a surface of one side of the first cover plate (**411**) adjacent to the electrode assembly (**30**), and at least a part of the second insulating block (**422**) is located between the first insulating block (**421**) and the main body part (**31**) of the electrode assembly (**30**), and is fixedly connected to the supporting member (**50**).

17. The battery cell (**10**) according to claim **16,** wherein the first insulating block (**421**) is configured to limit the position of the second insulating block (**422**) in at least one of the first direction (**x**) and the second direction (**y**), and is in clearance fit with the second insulating block (**422**) in at least one of the first direction (**x**) and the second direction (**y**), and the first direction (**x**) and the second direction (**y**) are perpendicular to each other and both are perpendicular to the thickness direction (**z**) of the cover plate (**41**).

18. The battery cell (**10**) according to any one of claims **15** to **17,** wherein the two cover plates (**41**) further comprise a second cover plate (**412**) connected to the end portion opening (**22**) on the other side of the case (**20**); the isolation structure (**42**) is fixed on a surface of one side of the second cover plate (**412**) adjacent to the electrode assembly (**30**), and is fixedly connected to the supporting member (**50**).

19. The battery cell (**10**) according to any one of claims **1** to **18,** wherein the supporting member (**50**) has a plurality of hollowed-out or thinned accommodation regions (**56**), and the total volume **V1** of the plurality of hollowed-out or thinned accommodation regions (**56**) and the total volume **V2** of the solid part of the supporting member (**50**) meet:

$$5\% \leq V1:(V1+V2) \leq 30\%.$$

20. The battery cell (**10**) according to claim **19,** wherein the plurality of hollowed-out or thinned accommodation regions (**56**) comprise: a plurality of circular holes, wherein the diameter **D** of each circular hole meets:

$$(1/3)*W \leq D \leq (2/3)*W;$$

wherein W is the width of the supporting member (**50**) in the thickness direction (**x**) of the main body part (**31**) of the electrode assembly (**30**).

21. The battery cell (**10**) according to claim **19,** wherein the plurality of hollowed-out or thinned accommodation regions (**56**) are arranged at equal intervals in the thickness direction (**z**) of the cover plate (**41**).

22. The battery cell (**10**) according to any one of claims **1** to **21,** further comprising:

   an insulating member (**60**) located within the case (**20**) and wrapping at least a part of the electrode assembly (**30**) and at least a part of the supporting member (**50**), and configured to separate the case (**20**) from the electrode assembly (**30**);
   wherein a region of the insulating member (**60**) wrapping the supporting member (**50**) has a first positioning hole (**61**), the supporting member (**50**) has a second positioning hole (**55**), wherein the first positioning hole (**61**) does not overlap with the second positioning hole (**55**).

23. The battery cell (**10**) according to claim **22,** wherein the supporting member (**50**) has a plurality of hollowed-out or thinned accommodation regions (**56**), and the second positioning hole (**55**) is located on one side of the plurality of hollowed-out or thinned accommodation regions (**56**) adjacent to the end portion of the supporting member (**50**).

24. The battery cell (**10**) according to claim **22** or **23,** wherein the supporting member (**50**) has a plurality of hollowed-out or thinned accommodation regions (**56**), and a hollowed-out accommodation region (**56**) among the plurality of hollowed-out or thinned accommodation regions (**56**) does not overlap with the first positioning hole (**61**).

25. A battery (**70**), comprising the battery cell (**10**) according to any one of claims **1** to **24.**

26. A electrical device, comprising the battery (**70**) according to claim **25.**

EP 4 546 556 A1

80

FIG. 1

70

FIG. 2

17

FIG. 3

FIG. 4

FIG. 5

FIG. 6

FIG. 7

A-A

**FIG. 8**

**FIG. 9**

**FIG. 10**

## INTERNATIONAL SEARCH REPORT

| International application No. |
| --- |
| **PCT/CN2022/107137** |

**A.    CLASSIFICATION OF SUBJECT MATTER**

H01M 50/593(2021.01)i;  H01M 50/102(2021.01)n;  H01M 50/15(2021.01)n

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 顶盖, 端盖, 盖板, 绝缘, 隔离, 支撑, 固定, top, cover, insulation, isolation, support, fix

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111512484 A (GS YUASA INTERNATIONAL LTD.) 07 August 2020 (2020-08-07) description, paragraphs 46-161, and figures 1-14 | 1-26 |
| X | CN 111512474 A (GS YUASA INTERNATIONAL LTD.) 07 August 2020 (2020-08-07) description, paragraphs 41-135, and figures 1-11 | 1-26 |
| X | CN 108028343 A (LITHIUM ENERGY & POWER G.M.B.H. & CO., KG. et al.) 11 May 2018 (2018-05-11) description, paragraphs 46-162, and figures 1-17 | 1-26 |
| X | CN 211376668 U (NINGDE CONTEMPORARY AMPEREX TECHNOLOGY CO., LTD.) 28 August 2020 (2020-08-28) description, paragraphs 68-115, and figures 1-16 | 1-26 |
| A | CN 114365344 A (SAMSUNG SDI CO., LTD.) 15 April 2022 (2022-04-15) entire document | 1-26 |
| A | JP 2019057444 A (GS YUASA INTERNATIONAL LTD.) 11 April 2019 (2019-04-11) entire document | 1-26 |
| A | JP 2021022482 A (TOYOTA INDUSTRIES CORP.) 18 February 2021 (2021-02-18) entire document | 1-26 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 December 2022** | **19 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/107137**

| Patent document cited in search report | | | Publication date (day/month/year) | Patent family member(s) | | | Publication date (day/month/year) |
|---|---|---|---|---|---|---|---|
| CN | 111512484 | A | 07 August 2020 | JP | WO2019131492 | A1 | 14 January 2021 |
| | | | | WO | 2019131492 | A1 | 04 July 2019 |
| | | | | US | 2020395579 | A1 | 17 December 2020 |
| | | | | DE | 112018006692 | T5 | 03 September 2020 |
| CN | 111512474 | A | 07 August 2020 | US | 2020395577 | A1 | 17 December 2020 |
| | | | | DE | 112018006700 | T5 | 10 September 2020 |
| | | | | JP | WO2019131481 | A1 | 21 January 2021 |
| | | | | WO | 2019131481 | A1 | 04 July 2019 |
| CN | 108028343 | A | 11 May 2018 | DE | 112016004250 | T5 | 14 June 2018 |
| | | | | WO | 2017047784 | A1 | 23 March 2017 |
| | | | | JP | WO2017047784 | A1 | 09 August 2018 |
| | | | | US | 2018261806 | A1 | 13 September 2018 |
| CN | 211376668 | U | 28 August 2020 | None | | | |
| CN | 114365344 | A | 15 April 2022 | KR | 20210145489 | A | 02 December 2021 |
| | | | | WO | 2021241939 | A1 | 02 December 2021 |
| JP | 2019057444 | A | 11 April 2019 | None | | | |
| JP | 2021022482 | A | 18 February 2021 | None | | | |

Form PCT/ISA/210 (patent family annex) (January 2015)